# EUROPEAN PATENT APPLICATION

(11) **EP 4 783 013 A1**
(43) Date of publication of application: **29.07.2026**
(21) Application number: 26151845.0
(22) Date of filing: 14.01.2026
(51) Int. Cl.: G06F 11/30, G06F 11/34

(54) **SYSTEM AND METHOD FOR ANALYZING APPLICATION PERFORMANCE USING COMBINED CONFIGURATION AND ACTIVITY METRICS**

(30) Priority: 27.01.2025 US 202519037723
(71) Applicant: Workday, Inc., Pleasanton, CA 94588 (US)
(72) Inventor: CHAIL, Rishi, Pleasanton, CA 94588 (US); NARAYANA, Vishnu, Pleasanton, CA 94588 (US); SETNESS, Andrew, Pleasanton, CA 94588 (US)
(74) Representative: Boult Wade Tennant LLP

(57) **Abstract**

A computer system may receive activity events through a distributed event queue, wherein the activity events measure user interactions with a software application. A computer system may execute distributed queries to collect configuration metrics about data model structures of components of the software application. A computer system may process the activity events and configuration metrics in parallel using multiple processing nodes to generate processed events. A computer system may store the processed events with associated timestamps. A computer system may correlate the processed events to identify a change in data model structures that affects performance of the software application.

## Description

### BACKGROUND

Many software applications utilize multi-dimensional data models to support their operations and processes. These applications evolve over time, leading to modifications in their structure and configuration. Such changes can significantly impact overall system performance and user experience. Understanding these impacts requires monitoring of both structural changes and their effects on system behavior. Applications generally store and process data across multiple dimensions such as time periods, entity structures, and record hierarchies. Some applications can include various components including spreadsheets, reports, dashboards, and processing engines that operate on this multi-dimensional data. Users interact with these components through actions such as viewing sheets or rows of data, modifying data, running calculations, and generating reports. The application maintains configuration data about the model structure, including the number of dimensions, hierarchical levels, and defined calculations, as well as activity data about user interactions and system performance.

### BRIEF DESCRIPTION OF THE DRAWINGS

FIG. 1 is a block diagram illustrating a system architecture for collecting and analyzing configuration and activity metrics according to some of the disclosed embodiments.
FIG. 2 is a flow diagram illustrating a method for distributed collection of configuration metrics according to some of the disclosed embodiments.
FIG. 3 is a flow diagram illustrating a method for collecting and batching activity metrics according to some of the disclosed embodiments.
FIG. 4 is a flow diagram illustrating a method for aggregating metrics across different time periods according to some of the disclosed embodiments.
FIG. 5 is a block diagram illustrating components of a distributed processing node according to some of the disclosed embodiments.
FIG. 6 is a flow diagram illustrating a method for correlating configuration changes with performance impacts according to some of the disclosed embodiments.
FIG. 7 is a block diagram illustrating the structure of configuration and activity metric data records according to some of the disclosed embodiments.
FIG. 8 is a flow diagram illustrating a method for maintaining data consistency during parallel metric collection according to some of the disclosed embodiments.
FIG. 9 is a block diagram illustrating a computing device according to some of the disclosed embodiments.

### DETAILED DESCRIPTION

In complex data processing systems, performance bottlenecks and inefficiencies can emerge from the interaction between system configuration and usage patterns. Traditional monitoring approaches collect either system-level metrics or user activity data in isolation, making it difficult to identify how structural changes to the data model affect system performance and user interactions. Additionally, collecting and processing large volumes of configuration and activity metrics across multiple application instances requires significant computational resources and time.

The system described herein includes a metrics collection service that operates in parallel with a main application server to gather both configuration and activity data. The service employs a distributed architecture with multiple processing nodes that collect two distinct types of metrics: periodic snapshots of system configuration data and continuous streams of user activity events. These metrics are stored in, as a non-limiting example, a time-series database that allows for historical analysis and correlation between configuration changes and system performance. Details of this system and its subcomponents are described in detail herein.

This architecture addresses the technical challenges facing software applications and underlying systems through several mechanisms. First, the distributed processing nodes can use thread pools (or similar concurrency primitives) to parallelize the collection of configuration metrics, reducing processing time by an order of magnitude compared to sequential approaches. Second, the system can batch activity events before storage to optimize database operations while maintaining data consistency through distributed locking. Third, the separation of metrics collection from the main application server prevents monitoring operations from impacting application performance. The correlation of configuration and activity metrics enables identification of specific structural changes that affect system performance.

Existing metrics collection systems focus on either collecting system-level metrics like central processing unit (CPU) and memory usage, or tracking discrete user events like button clicks and page loads. These systems cannot identify relationships between structural configuration changes and performance impacts. Additionally, existing systems that collect configuration data typically execute queries sequentially, leading to extended processing times that limit the frequency of data collection. Further, many systems integrate metrics collection directly into the application server, causing monitoring operations to compete with application processes for computational resources. The disclosed embodiments overcome these technical deficiencies through its distributed architecture, parallel processing capabilities, and correlation of configuration with activity data.

Additionally, while existing application monitoring tools like metrics aggregators and user activity trackers can collect individual data points, they typically focus on system-level metrics or user interface interactions in isolation. These tools cannot provide insights into how structural changes to the application's underlying data model affect performance. The disclosed embodiments address this deficiency by correlating configuration metrics with activity data, enabling detection of performance impacts from model structure changes and providing actionable recommendations for optimization.

In various other implementations, the disclosure describes a non-transitory computer-readable storage medium for tangibly storing computer program instructions capable of being executed by a computer processor, the computer program instructions defining steps for performing the methods described above. Further, in other implementations, a device comprising a processor and a storage medium for tangibly storing thereon program logic for execution by the processor, the program logic comprising steps for performing the methods described above.

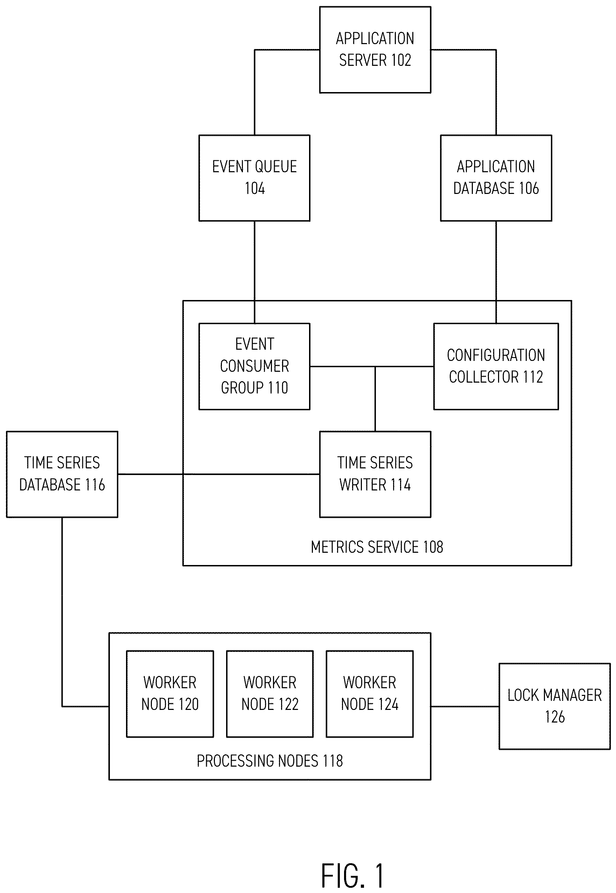

FIG. 1 is a block diagram illustrating a system architecture for collecting and analyzing configuration and activity metrics according to some of the disclosed embodiments.

The illustrated system includes an application server 102 that can generate at least two distinct types of data, for example: activity events that are sent to an event queue 104, and configuration data that is stored in an application database 106. In some implementations, the activity events represent user interactions and performance measurements, such as the time taken to open sheets or execute reports. In some implementations, configuration data can include structural information about the application state, including metrics such as the number of dimensions, levels, and defined calculations.

In some implementations, the event queue 104 provides temporary storage and reliable delivery of activity events before processing. It implements a stream-based architecture that supports consumer groups, allowing multiple consumers to process events in parallel while ensuring each event is processed exactly once. The queue maintains the state of event processing, tracking which events have been delivered to consumers but not yet acknowledged. This enables automatic retry mechanisms if a consumer fails to process an event successfully.

In some implementations, a metrics service 108 processes both activity events and configuration data. Within metrics service 108, an event consumer group 110 receives and processes activity events from event queue 104. The event consumer group 110 enables distributed consumption of events, ensuring each event is processed exactly once even when multiple instances of the service are running. In some implementations, this approach provides fault tolerance-if a consumer fails while processing events, the events are automatically reassigned to other consumers after a configured timeout period.

A configuration collector 112 within metrics service 108 periodically retrieves configuration data from application database 106. The configuration collector 112 can execute a set of predefined queries to gather various configuration metrics. These queries can be distributed across multiple processing nodes to enable parallel execution and improve collection efficiency. The configuration collector 112 can also coordinate with other components to ensure consistent data collection across the system.

In some implementations, the metrics service 108 operates independently from application server 102, preventing monitoring operations from impacting application performance. This separation of concerns allows the metrics service to scale independently based on monitoring requirements. The service can adjust a number of the processing nodes 118 based on the volume of data that needs to be processed, ensuring efficient resource utilization while maintaining consistent metric collection.

In some implementations, the application database 106 stores the current state of the system configuration, providing a source of truth for configuration metrics. The configuration collector 112 executes queries against this database to gather various structural metrics. These queries are designed to be efficient and minimize impact on the application database. The collected metrics provide insights into the system's organization and complexity, enabling analysis of how structural changes affect system performance.

Both the event consumer group 110 and configuration collector 112 forward their processed data to a time series writer 114, which manages storage operations in a time series database 116. The time series writer 114 implements different strategies for configuration and activity metrics. Configuration metrics can represent point-in-time snapshots and are written directly to the database. Activity metrics can be batched to optimize write operations, with batches being formed based on either size (up to 100 events) or time intervals. The writer can maintain separate tables for different types of metrics to support varying retention policies and query patterns.

In some implementations, the time series database 116 serves as the permanent storage for both configuration snapshots and activity metrics. This database is optimized for time-series data and supports efficient querying across time ranges. It implements different retention policies for various types of metrics, allowing historical analysis while managing storage costs. The combination of configuration and activity metrics in a single database enables correlation analysis between structural changes and system performance.

The system employs processing nodes 118 to distribute the workload of collecting and processing metrics. Each worker node (e.g., worker node 120, worker node 122, and worker node 124) operates as an autonomous unit capable of processing both configuration queries and activity events. The nodes participate in consumer groups for activity event processing and retrieve work items from a distributed queue for configuration metric collection. Each node maintains internal thread pools to process multiple tasks concurrently, significantly improving processing efficiency. In production environments, this distributed architecture enables the system to process approximately 30,000 configuration queries in 3-5 minutes, compared to over 30 minutes with sequential processing depending on the number of worker nodes.

In some implementations, a lock manager 126 coordinates operations between the processing nodes 118 to maintain data consistency. The lock manager implements a distributed locking mechanism that ensures critical operations, such as daily configuration data collection and metric aggregation jobs, are executed by only one node at a time. When a node requires exclusive access to a resource, it requests a lock from lock manager 126. If the lock is unavailable, the node implements a backoff strategy and retries the request. This locking mechanism prevents duplicate processing while enabling high throughput through parallel execution of independent tasks.

Together, the components of the system form a scalable and reliable system for collecting and analyzing application metrics. The architecture's use of distributed processing, parallel execution, and coordinated operations enables efficient handling of large-scale metric collection while maintaining data consistency and system reliability. The separation of configuration and activity metrics, combined with their storage in a time-series database, provides a foundation for system analysis and performance optimization. Further functional details of these components are described in connection with the following figures.

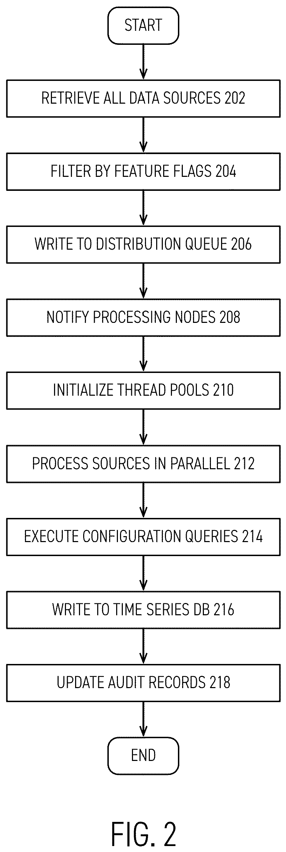

FIG. 2 is a flow diagram illustrating a method for distributed collection of configuration metrics according to some of the disclosed embodiments.

In step 202, the method retrieves a list of all data sources from which configuration metrics need to be collected. Each data source can represent a tenant or instance in the system. The retrieval process can query system catalogs through connection pools with circuit breaker protection to identify active data sources, including their connection information and current status. Result streaming can be used to prevent memory exhaustion with large tenant lists, while caching of tenant metadata optimizes subsequent access patterns. This inventory of data sources provides the foundation for the subsequent collection process.

In step 204, the method filters the retrieved data sources based on feature flags and other eligibility criteria. This filtering ensures that metric collection only occurs for tenants who have enabled the monitoring features. The filtering process evaluates multiple criteria including tenant status, monitoring permissions, and feature flag states. The filtering engine can receive dynamic updates allowing real-time modification of collection policies, with flag state cached and appropriate invalidation mechanisms ensuring timely updates. Invalid or inactive data sources are excluded from further processing. This step is crucial for respecting tenant preferences and optimizing resource utilization by only processing relevant data sources.

In step 206, the method writes the filtered list of data sources to a distribution queue which can be implemented as a distributed data structure. The queue serves as a centralized work list that allow for parallel processing across multiple nodes. Each entry in the queue includes the data source identifier and associated metadata required for processing. Queue operations implement transactional semantics ensuring reliable task handling, while optionally supporting priority levels enabling preferential processing of critical tenants. The queue implementation ensures that each data source is processed exactly once, even in cases of node failure or restart.

In step 208, the method notifies processing nodes about the available work using, for example, a publish-subscribe mechanism. This notification triggers the nodes to begin consuming work items from the distribution queue. The notification mechanism can inform all available nodes simultaneously, enabling efficient work distribution. The method can retrieve real-time node capacity metrics enabling informed placement decisions and implements adaptive batch sizing based on observed processing capabilities. This approach allows the method to scale horizontally by adding more processing nodes as needed.

In step 210, each processing node initializes its thread pool in preparation for parallel query execution. The thread pool size is configurable based on system resources and expected workload. Pool initialization includes memory allocation following predictable patterns enabling efficient garbage collection. Each thread in the pool can independently execute configuration queries, enabling efficient utilization of processing resources. The thread pool management includes mechanisms for handling thread lifecycle, error conditions, and resource constraints.

In step 212, the processing nodes begin consuming work items from the distribution queue in parallel. Each node may process multiple data sources concurrently using its thread pool. Node capacity tracking includes multiple metrics including CPU utilization, memory availability, and current workload. The parallel processing architecture enables the method to handle large numbers of data sources efficiently, reducing the total time required for metric collection. The work distribution algorithm implements fair sharing ensuring equitable resource allocation across tenants while maintaining processing efficiency.

In step 214, the method executes configuration queries against each data source within controlled environments with memory and CPU limits. These queries collect various metrics about the system's structure and organization. The method can utilize connection pooling optimizing database resource utilization. Each query measures specific aspects of the configuration, such as dimension definitions, hierarchy levels, calculation definitions, sheet configurations, and access patterns. The query execution includes timeout handling and resource management to prevent individual queries from impacting overall system performance.

In step 216, the results from the configuration queries are written to a time series database through an optimized storage layer. The database stores each metric with associated timestamps and source identifiers, enabling historical analysis and trend detection. Write operations are optimized through batching, with multiple metrics from the same data source written in a single transaction. The storage implementation includes buffer management preventing memory exhaustion during large writes. The database schema supports efficient querying of historical data while maintaining data integrity and consistency.

In step 218, the method updates audit records to track the completion of metric collection through a logging system. The audit records capture detailed information about the collection process, including completion timestamps, metric counts, processing duration, error conditions, and node assignments. Log entries include correlation identifiers enabling end-to-end tracking of operations. These audit records enable monitoring of the collection process itself and provide accountability for regulatory compliance. They also facilitate troubleshooting by maintaining a detailed record of each collection operation.

As illustrated, the method completes after all data sources have been processed and audit records updated. In some implementations, the method can include cleanup and verification procedures after executing. For example, any resources allocated during the process, such as thread pools and database connections, are properly released through managed shutdown procedures. The method can maintain the audit records and collected metrics for subsequent analysis and reporting. The method can further include verification of data consistency and cleanup of temporary processing artifacts.

Throughout the entire process, the method can implement error handling mechanisms with recovery procedures. Failed queries are retried with exponential backoff to handle transient failures, while unprocessable data sources are marked for investigation to enable operational follow-up. Node failures trigger automatic reassignment of work items to ensure processing completeness, and database write failures are retried with transaction management to maintain data consistency. The method can maintain detailed error metrics identifying problematic patterns. All exceptional conditions are captured in audit records to enable system monitoring and improvement.

In various implementations, the method can be initiated through a scheduling system. This process typically executes on a scheduled basis, often daily during off-peak hours to minimize impact on system performance. The scheduling mechanism implements distributed coordination preventing concurrent execution across system instances. Execution timing can be configured based on system usage patterns and operational requirements. The scheduler maintains execution windows and implements policies for handling delayed or missed executions based on historical performance data.

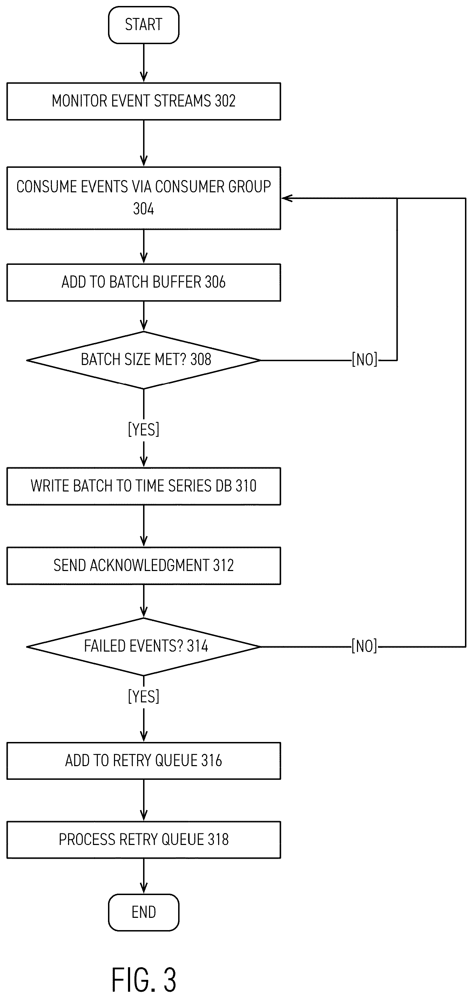

FIG. 3 is a flow diagram illustrating a method for collecting and batching activity metrics according to some of the disclosed embodiments.

In step 302, the method begins monitoring event streams for incoming activity data. These streams can include information about user interactions and system operations, such as sheet access times, report generation durations, and user login events. The monitoring process can maintain persistent connections to the event sources to ensure continuous data collection. Each stream connection implements flow control mechanisms to prevent overwhelming consumers during peak load. The monitoring system tracks connection health through heartbeat mechanisms and automatically reestablishes connections if failures occur. Stream monitoring includes tracking of message rates, latency measurements, and connection status metrics.

In some implementations, the method establishes connections to event streams that capture real-time activity data from application components. During initialization, the method can create persistent connections to event sources, configures connection pooling parameters, and establishes monitoring channels. The initialization process includes verifying the availability of downstream systems, including the time series database and retry queue infrastructure. Connection parameters such as timeout values, keep-alive intervals, and buffer sizes are configured based on expected event volumes and system resources.

In step 304, the method consumes events through a consumer group mechanism. Consumer groups enable distributed event processing by allowing multiple consumers to share the workload while ensuring each event is processed exactly once. Each consumer maintains its position within the event stream through offset tracking, enabling reliable processing even in the presence of failures. The consumer group protocol includes periodic offset commits to persist processing progress. When new consumers join or existing consumers fail, the group automatically rebalances partitions among remaining consumers. This rebalancing process ensures continuous processing while maintaining processing guarantees.

In step 306, events are added to a batch buffer as they are consumed. The buffer can implement a circular memory structure to manage event accumulation and processing. Each event in the buffer can maintain its complete metadata including timestamp, event type, source identifier, and processing annotations. The buffer implementation includes memory management mechanisms to prevent overflow conditions. If the buffer approaches capacity before reaching the target batch size, it implements backpressure mechanisms to slow event consumption. The buffering system maintains ordering guarantees within each partition while enabling parallel processing across partitions.

In step 308, the method checks if the batch buffer has reached its capacity of events. In some implementations, a fixed batch size (e.g., 100) may be used. In some implementations, this batch size represents a balance between processing efficiency and data freshness, determined through performance testing and monitoring. In general, performance testing has shown that this approach efficiently manages memory utilization, with typical production workloads consuming approximately 50MB of memory for 350,000 sheet events, 37MB for 260,000 report events, and 15MB for 110,000 user events. The method can implement automatic memory reclamation through periodic event trimming, ensuring stable long-term operation even under high event volumes The batch size is configurable and can be adjusted based on system performance characteristics and requirements. If the batch size has not been reached, the method continues consuming events. A secondary timeout mechanism ensures that partially filled batches are processed if insufficient events arrive within a configured time window. This prevents indefinite waiting during low-volume periods.

In step 310, the full batch is written to the time series database. The write operation executes within a transaction to ensure data consistency. The transaction management includes preparation of statement batches to optimize database performance. Write operations include retry logic with exponential backoff for handling transient database issues. The database schema organizes events by timestamp and type, with appropriate indexing strategies to support various query patterns. The write process includes validation of event data against schema constraints before committing.

In step 312, after successful database writes, acknowledgments are sent for the processed events. These acknowledgments follow the consumer group protocol to update processing offsets. The acknowledgment process includes verification that database writes have been durably committed. The method can maintain a record of acknowledgment status to support recovery scenarios. Acknowledgment batching optimizes network utilization while maintaining processing guarantees.

In step 314, the method checks for any events that failed during processing. The failure detection system categorizes errors based on their nature: transient failures that may resolve automatically, persistent failures requiring intervention, and validation failures indicating data issues. Each failure category triggers appropriate handling mechanisms. The method can maintain failure statistics and generates alerts when failure rates exceed configured thresholds. Failure detection includes monitoring of database connection health, validation results, and system resource availability.

In step 316, failed events are added to a retry queue for subsequent processing. The retry queue implements a priority mechanism where events with fewer retry attempts receive priority. Each retry attempt includes incremental backoff delays to prevent system overload. The retry queue maintains the original event metadata along with retry attempt counts and failure reasons. Events exceeding retry limits are moved to a dead letter queue for manual investigation. The retry system includes monitoring of retry patterns to identify systemic issues.

In step 318, the method processes events from the retry queue. This processing implements backoff strategies including exponential delays with jitter to prevent thundering herd problems. Retry processing includes additional validation and monitoring to identify persistent failure patterns. The method can maintain separate performance metrics for retry processing to track success rates and identify problematic event patterns. Events processed from the retry queue maintain their original ordering within the context of their source partition.

In some implementations, the entire process may operate continuously in a loop, constantly consuming and processing new events while managing failures through the retry mechanism. This ensures reliable event processing while maintaining system performance through batching and distributed processing capabilities. The system includes monitoring of processing rates, latencies, and error conditions. Performance metrics are aggregated and analyzed to identify optimization opportunities and potential issues. The architecture supports horizontal scaling through the addition of consumer group members, with automatic workload rebalancing to maintain processing efficiency.

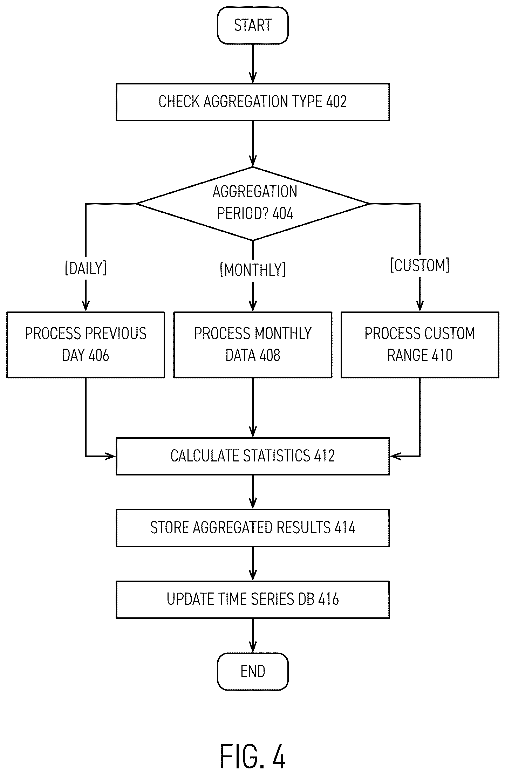

FIG. 4 is a flow diagram illustrating a method for aggregating metrics across different time periods according to some of the disclosed embodiments.

In step 402, the method determines which type of aggregation to perform through a multi-phase decision process. The method supports multiple aggregation periods to accommodate different analysis needs, with each type implementing specific optimization strategies. A configuration manager maintains aggregation rules including time windows, calculation parameters, and output specifications. The method validates aggregation parameters against system constraints and available resources. For recurring aggregations, the method can maintain state information to enable incremental processing. The aggregation type selection considers data volume, time range, and computational complexity to optimize resource utilization.

In step 404, the method branches based on the aggregation period through a routing mechanism. Three distinct paths are supported, although others may be implemented as desired: daily aggregation, monthly aggregation, and custom period aggregation. Each path implements specialized processing logic appropriate for its time scale while maintaining consistent statistical calculations. The method can maintain separate processing queues for each aggregation type to enable parallel execution while preventing resource contention.

In step 406, for daily aggregation, the method processes data from the previous day using a sliding window approach. The process partitions data into configurable time slices to enable parallel processing while maintaining temporal ordering. Daily processing consolidates high-frequency raw metrics into daily summaries using memory-efficient streaming algorithms. In some implementations, the method can use adaptive batch sizing based on data density and available resources. Processing includes calculation of various statistical measures including weighted averages, percentile distributions, and time-based patterns. The daily aggregation maintains interim results in memory-mapped files to handle large data volumes efficiently.

In step 408, for monthly aggregation, the method processes an entire month of data using a hierarchical aggregation strategy. The process leverages daily aggregates where available to optimize processing efficiency. Monthly processing implements algorithms for detecting seasonal patterns and long-term trends. The system uses temporal partitioning to enable parallel processing of different time segments while maintaining consistency. Memory management includes efficient handling of sparse data periods and varying data densities. The monthly aggregation implements incremental processing to handle updates to historical data efficiently.

In step 410, for custom range aggregation, the method employs a dynamic processing strategy adapted to the specified time period. The method can implement efficient data retrieval patterns based on the requested time range and granularity. Custom aggregation handles variable-length periods through adaptive partitioning strategies that optimize processing efficiency. The implementation includes boundary handling for partial periods and irregular intervals. Memory management adapts to varying data volumes through dynamic buffer allocation and cleanup.

In step 412, the method performs statistical calculations on the metric data to generate aggregate measures. These calculations include computing average response times for sheet and report operations, calculating 95th percentile values to identify performance boundaries, and determining maximum and minimum values across the time period. For activity metrics like sheet access times, the system computes summary statistics that help identify performance trends. For configuration metrics, the calculations track changes in structural measurements like dimension counts and hierarchy levels over time.

The system processes these calculations in parallel where possible, with different statistical measures computed simultaneously across the dataset. This parallel processing capability enables efficient handling of large data volumes while maintaining consistent results. The calculated statistics provide insights into both typical behavior through averages and edge cases through percentile calculations, enabling comprehensive analysis of system performance.

The process outputs multiple statistical measures that enable different types of analysis - daily averages show typical performance, percentile calculations identify performance boundaries, and maximum values highlight potential issues requiring investigation. These statistics form the basis for subsequent correlation analysis between configuration changes and performance impacts.

In step 414, the aggregated results are persisted using a storage strategy. The storage schema implements efficient indexing for various query patterns while minimizing storage overhead. The method can maintain metadata about the aggregation process including processing parameters and data lineage. Storage operations implement transaction management with appropriate isolation levels to maintain consistency. The schema supports efficient retrieval of aggregated data while preserving relationships with source data.

In step 416, the method updates the time series database through an optimized write process. The update operation implements efficient bulk loading mechanisms for large result sets. The database schema includes indexing strategies to support various query patterns. The method can maintain consistency between different aggregation levels through carefully managed update operations. Write operations include verification of referential integrity and constraint validation.

In some implementations, the method can terminate by executing a completion process. This can include verification of aggregation completeness through checksum validation and record counting. The method can perform cleanup of temporary storage and releases computational resources. Audit records capture detailed information about the aggregation process including performance metrics and error conditions. The completion phase includes updates to system monitoring metrics and generation of completion notifications.

In some implementations, this process executes on a scheduled basis to consolidate raw metrics data into summarized statistics that enable efficient analysis and reporting. During initialization, the method can establish database connections using connection pooling to manage resource utilization. The process determines available computational resources and configures parallel processing parameters accordingly. Memory allocation for aggregation buffers is optimized based on the expected data volume and available system resources. The initialization phase includes verification of data source availability and validation of configuration parameters.

In some implementations, the method can utilize various optimization techniques including caching of intermediate results, efficient memory management through streaming algorithms, and adaptive resource allocation. The method can maintain detailed metrics about processing efficiency and resource utilization to enable continuous optimization. Implementation includes handling of edge cases including data gaps, timezone transitions, and daylight saving time changes. The architecture supports extensibility through pluggable statistical calculations and customizable aggregation rules.

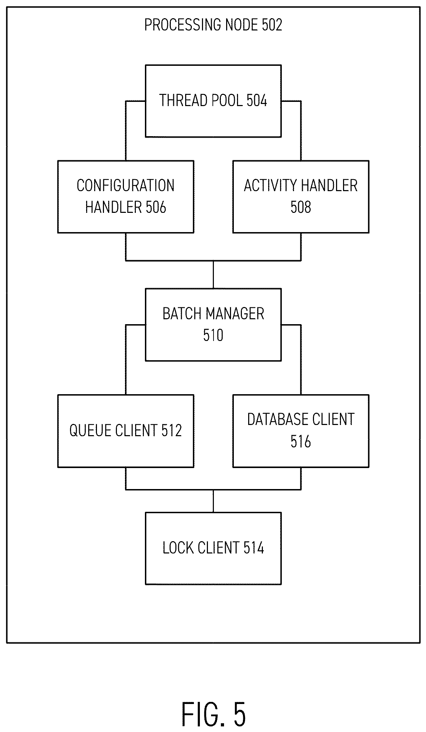

FIG. 5 is a block diagram illustrating components of a distributed processing node according to some of the disclosed embodiments.

Each processing node 502 implements an architecture for parallel processing of metrics collection tasks. At its core, the node contains a thread pool 504 that manages concurrent execution through a multi-level scheduling system. The thread pool maintains both a core set of persistent threads and a dynamic expansion pool that scales based on workload. Thread lifecycle management includes handling of thread creation, destruction, and state maintenance. The pool implements work stealing algorithms to balance load across threads and minimize thread contention. Thread monitoring includes collection of execution metrics, idle time tracking, and thread health verification. The scheduler implements priority queuing to ensure critical tasks receive appropriate resources while preventing starvation of lower-priority work.

The thread pool 504 implements configurable policies for thread management including maximum pool size, core pool size, keep-alive times, and queue capacity. Work submission follows a producer-consumer pattern with queuing mechanisms. The queuing system implements backpressure when submission rates exceed processing capacity. Thread lifecycle events generate metrics for system monitoring and performance optimization. The pool maintains separate queues for different task types, enabling specialized handling of configuration and activity processing.

Task execution within the thread pool follows a structured lifecycle. Each task progresses through defined states including queued, executing, completed, and failed. State transitions generate events for monitoring and logging. The pool implements task cancellation mechanisms with proper resource cleanup. Task execution includes context propagation ensuring required information is available throughout processing. The pool maintains execution statistics including timing metrics, error rates, and resource utilization.

Two specialized handlers receive work from the thread pool. The configuration handler 506 implements query management for configuration metric collection. Query execution includes connection pooling, statement caching, and result set streaming. The handler implements batching of similar queries to optimize database utilization. Query timeouts prevent long-running operations from impacting system performance. Result processing includes validation, transformation, and preparation for storage. The handler maintains query statistics and generates alerts for performance anomalies.

The activity handler 508 manages event processing through a state machine. Event processing includes validation, enrichment, and transformation stages. The handler implements buffering mechanisms to handle varying event rates. Processing includes deduplication logic to handle potential replay scenarios. The handler maintains ordering guarantees within event streams while enabling parallel processing across streams. Event processing includes error handling with appropriate retry strategies.

A batch manager 510 coordinates all data processing operations through a multi-phase commit protocol. The manager implements separate strategies for configuration and activity data. Configuration metric batching focuses on query result aggregation with memory-efficient processing of large result sets. Activity metric batching implements adaptive batch sizing based on event rates and system load. The manager maintains batch state information enabling recovery from failures during processing. Batch processing includes validation steps ensuring data consistency before storage.

The batch manager implements memory management for batch processing. Memory allocation follows a pooled approach to minimize garbage collection impact. The manager implements circuit breakers to prevent memory exhaustion during high-load scenarios. Batch processing includes progress tracking enabling recovery from interruptions. The manager maintains batch metadata supporting audit and monitoring requirements.

Three specialized clients handle external system interactions. The queue client 512 implements the consumer group protocol with partition management. The client handles partition rebalancing events while maintaining processing guarantees. Event acknowledgment follows a two-phase approach ensuring reliable processing. The client implements flow control preventing overflow of internal buffers. Client operations generate detailed metrics supporting system monitoring.

The database client 516 manages interactions with the time series database through a connection pool. Connection management includes health checking, automatic recovery, and load balancing. The client implements statement preparation and caching optimizing database interactions. Write operations follow a batched approach with transaction management. The client includes retry logic handling various failure scenarios.

The lock client 514 implements distributed locking through a lease-based protocol. Lock acquisition includes deadlock prevention through ordered locking. The client maintains lock state through a heartbeat mechanism. Lock renewal follows an automatic process preventing unintended release. The client implements lock escalation for handling varying scope requirements.

Internal data flow between components follows a preset protocol. Data passing implements zero-copy optimization where possible. Flow control mechanisms prevent component overflow. The system maintains backpressure through the entire processing pipeline. Component interactions generate events supporting monitoring and debugging.

In some implementations, the entire node implements resource management. Memory allocation follows a pooled approach minimizing fragmentation. CPU utilization is monitored enabling adaptive processing rates. I/O operations are optimized through batching and caching. The node maintains detailed resource utilization metrics supporting capacity planning.

In some implementations, monitoring covers all aspects of node operation. Health checks verify component status and interaction patterns. Metrics collection includes detailed timing measurements and error rates. The monitoring system generates alerts for anomalous conditions. Performance metrics support ongoing optimization efforts.

In some implementations, error handling follows a hierarchical approach. Each component implements appropriate recovery mechanisms. Error propagation ensures proper handling at the correct level. The system maintains error statistics identifying problematic patterns. Recovery mechanisms include automatic retry with exponential backoff.

In some implementations, configuration management enables dynamic adjustment of node behavior. Component parameters can be modified without restart. Configuration changes generate audit events tracking modifications. The system validates configuration changes before application. Component behavior adapts to configuration updates automatically.

The internal structure enables efficient processing while maintaining system reliability. Component isolation prevents cascade failures. The architecture supports horizontal scaling through node addition. System design emphasizes maintainability and operational simplicity. This architecture enables the node to process high metric volumes while maintaining data consistency and system reliability.

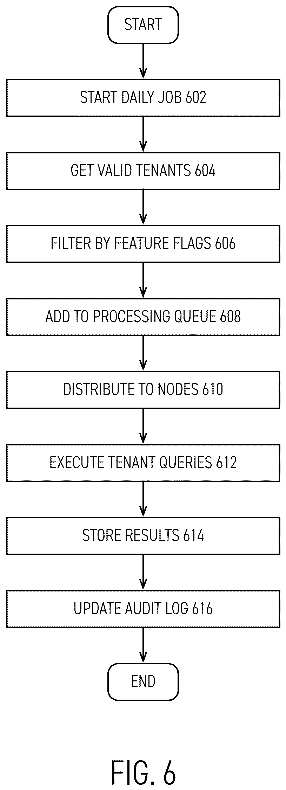

FIG. 6 is a flow diagram illustrating a method for correlating configuration changes with performance impacts according to some of the disclosed embodiments.

In step 602, the method initiates the daily metric collection job through a scheduling mechanism. The scheduler implements a distributed coordination protocol to ensure exactly-once execution across multiple system instances. Job initialization includes verification of system prerequisites including database availability, node health, and resource availability. The scheduling system can implement lease-based locks preventing concurrent execution across different system instances. Initialization includes loading of configuration parameters that control execution behavior including timeout values, retry limits, and processing thresholds. The system maintains execution windows during which jobs can run, implementing policies for handling delayed or missed executions. Schedule adjustments consider system load patterns derived from historical execution metrics.

The job initialization process can implement resource management. Memory allocation follows a predictable pattern enabling efficient garbage collection. The system establishes connection pools for various backend services with appropriate sizing based on expected workload. Initialization includes verification of monitoring systems ensuring proper metric collection throughout execution. The process generates events marking execution phases enabling detailed tracking of job progression.

In step 604, the method retrieves a set of valid tenants. In some implementations, a tenant registry query executes through a connection pool with circuit breaker protection. Query execution includes result streaming preventing memory exhaustion with large tenant lists. The retrieval process implements caching of tenant metadata optimizing subsequent access patterns. Tenant validation includes verification of account status, service level agreements, and system quotas. The process maintains retrieval metrics enabling optimization of query patterns.

Status verification can include checking multiple system indicators including payment status, service agreements, and usage quotas. Permission verification implements role-based access control ensuring appropriate authorization for metric collection. The process maintains detailed logs of verification decisions supporting audit requirements. The system caches verification results with appropriate invalidation policies improving performance for subsequent operations.

In step 606, the method can include filtering tenants by feature flags. Flag evaluation includes support for Boolean combinations enabling complex filtering logic. The filtering engine supports dynamic updates allowing real-time modification of collection policies. Flag state is cached with appropriate invalidation mechanisms ensuring timely updates. The method can maintain metrics about filter application supporting optimization of filtering rules.

In step 608, the method can include utilizing a queue system for distributing work across nodes. The queue uses a distributed data structure that ensures reliable task handling through transactional operations. To manage system load, the queue supports priority levels that allow critical tenants to be processed first. The queue maintains reliability through state replication across nodes and includes cleanup mechanisms to prevent queue buildup during failures.

Each entry in the queue contains metadata needed for processing, including tenant identification, processing requirements, and routing information. To prevent system overload, the queue implements backpressure mechanisms. The queue system tracks performance metrics to monitor processing progress.

In step 610, the method distributes work across processing nodes using load balancing algorithms. The method tracks real-time capacity metrics for each node to make informed placement decisions. Work assignments take into account node affinity to optimize cache usage and adapt batch sizes based on observed processing capabilities. Before assigning work, the system verifies node health to avoid using failing nodes.

The method tracks multiple capacity metrics for each node, including CPU usage, available memory, and current workload. The distribution algorithm ensures fair resource allocation across tenants while considering data locality to minimize data movement. The system maintains metrics about work distribution to optimize placement decisions.

In step 612, the method executes queries with controlled resource usage. Each query runs in an environment with defined memory and CPU limits. The system uses connection pooling to optimize database access and implements result streaming to handle large result sets efficiently. The method collects execution metrics to analyze performance and generates insights about model design. This analysis produces model health scores based on factors like dimension complexity, hierarchy depth, and calculation dependencies. These scores help generate specific optimization recommendations, such as restructuring dimensions or modifying calculations, tailored to each tenant's usage patterns.

Query execution includes timeout handling to prevent runaway queries and prioritization to ensure critical measurements complete on time. The system optimizes database usage through statement preparation and caching, while maintaining detailed execution logs for performance analysis.

In step 614, the method stores the query results. Write operations use transactions to ensure atomic updates and efficient indexing strategies for subsequent queries. The method validates data through type checking and range verification, while tracking storage metrics to optimize write operations.

In some implementations, the storage system manages memory buffers to handle large writes and implements batched writing to optimize database performance. Storage operations verify data integrity through checksums and maintain detailed logs for audit purposes.

In step 616, the method updates an audit log of system operations. Logs include timing information for performance analysis and correlation identifiers for end-to-end tracking.

Throughout execution, the method can include comprehensive error handling and monitoring. The system uses exponential backoff for retries to prevent overload and categorizes errors for appropriate handling. Monitoring includes performance timing, anomaly detection, and resource tracking. The entire process maintains data consistency through prerequisite verification, atomic transactions, and operation verification, enabling reliable execution in a distributed environment.

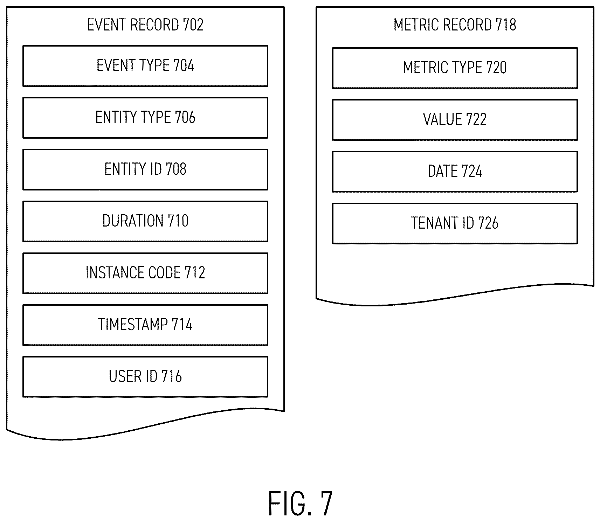

FIG. 7 is a block diagram illustrating the structure of configuration and activity metric data records according to some of the disclosed embodiments.

The event record 702 implements a structure for capturing activity events with minimal storage overhead while maintaining query efficiency. Each record follows a schema that balances normalization with query performance. The structure implements variable-length field optimization, using compact representations for common values while supporting full-length storage when needed.

The event type 704 field implements an extensible enumeration pattern. The type system includes both pre-defined and custom event categories, encoded using a compact binary format. Type definitions include hierarchical relationships enabling efficient category-based queries. The encoding scheme supports version compatibility, allowing new event types to be added without requiring database schema changes. Type metadata includes attributes controlling processing behavior and retention policies.

The entity type 706 field implements a similar extensible enumeration, identifying system components using a hierarchical classification system. The encoding includes component version information enabling tracking of behavioral changes. Entity type definitions include relationships between components supporting impact analysis. The classification system supports dynamic extension while maintaining backward compatibility.

The entity ID 708 field implements a composite identifier structure. The ID format includes tenant isolation ensuring cross-tenant uniqueness. The structure supports both numeric and string-based identifiers through an efficient encoding scheme. ID generation follows a distributed algorithm preventing collisions across system instances. The format includes checksum verification enabling validation of identifier integrity.

The duration field 710 implements high-precision timing storage. The field uses a specialized format optimizing storage of common duration ranges while supporting microsecond precision when needed. Duration storage includes timing source identification enabling correlation across system components. The implementation supports statistical operations through appropriate numeric representation.

The instance code 712 implements a multi-level identification scheme. The code structure identifies both physical and logical system instances. Instance identification includes geographic location enabling locality-aware processing. The encoding supports dynamic instance registration while maintaining identifier stability. Instance codes include version information supporting deployment tracking.

The timestamp 714 field implements temporal storage. The timestamp format supports multiple timezone representations while maintaining UTC normalization. Storage includes sub-millisecond precision when available. The implementation handles special temporal cases including leap seconds and daylight saving transitions. Timestamp encoding optimizes range-based query performance.

The user ID 716 field implements a secure identification scheme. The ID format supports multiple authentication systems while maintaining consistent representation. User identification includes role information enabling access control during query operations. The encoding supports anonymous operation tracking when required by privacy controls.

The metric record 718 structure implements efficient storage for configuration measurements. The record format optimizes storage of repeated measurements while maintaining temporal accuracy. The structure supports both scalar and vector measurements through a flexible encoding scheme. Record format includes metadata controlling aggregation behavior and retention policies.

The metric type 720 implements a classification system. Type definitions include measurement units and valid ranges. The classification supports derived metrics through computation rules. Type metadata includes aggregation policies controlling statistical processing. The implementation supports hierarchical organization enabling efficient filtering.

The value field 722 implements a flexible storage format supporting multiple data types. The implementation efficiently handles both discrete and continuous measurements. Value storage includes precision information enabling accurate statistical processing. The format supports both scalar and structured values through efficient encoding.

The date field 724 implements calendar-aware temporal storage. The implementation supports both point-in-time and interval measurements. Date storage includes timezone context enabling correct temporal analysis. The format optimizes range-based query performance through appropriate indexing.

The tenant ID 726 implements secure multi-tenant isolation. The ID scheme ensures cross-tenant uniqueness while supporting efficient filtering. Tenant identification includes service tier information enabling policy enforcement. The implementation supports tenant hierarchy enabling organizational analysis.

Both record types can implement indexing strategies. Primary indices optimize common query patterns including temporal and entity-based access. Secondary indices support analytical queries while maintaining update efficiency. Index structures implement prefix optimization reducing storage overhead. The system maintains index statistics enabling query optimization.

Both structures can support schema evolution through a versioning system. Schema changes maintain backward compatibility through careful field addition. Version management includes migration tools enabling efficient schema updates. The system maintains schema version history supporting audit requirements.

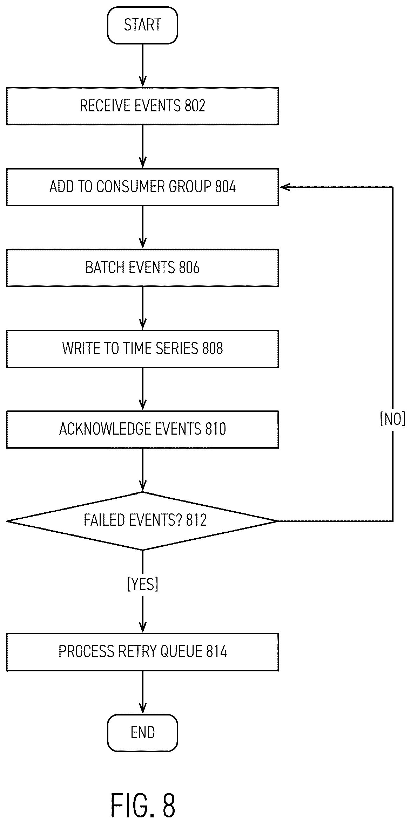

FIG. 8 is a flow diagram illustrating a method for maintaining data consistency during parallel metric collection according to some of the disclosed embodiments.

In step 802, the method can include receiving events using, for example, a buffering architecture. The reception mechanism can establish persistent connections with keep-alive monitoring and automatic reconnection capabilities. Each connection can implement flow control preventing buffer overflow conditions. The system maintains separate input queues for different event sources, enabling independent flow control for each source. Input buffering uses a configurable buffer implementation with overflow policies, and buffer management can include memory pressure monitoring to trigger backpressure when necessary.

In step 804, the method can include adding events to a consumer group. Group membership management can include heartbeat monitoring and automatic rebalancing on membership changes. The assignment algorithm ensures distribution of partitions across consumers while maintaining processing locality. Consumer state management includes offset tracking enabling exactly-once processing guarantees. The system can implement session timeout handling to ensure recovery from consumer failures.

In step 806, the method can include batching events. The batching system can maintain separate memory pools for different event types to enable efficient resource utilization. Batch formation includes ordering guarantees preserving relationships between events. The implementation supports both size-based and time-based batch triggering with configurable thresholds. Batch management can include memory reclamation to prevent memory leaks during processing.

In step 808, the method can include writing batches to the database using transaction management. Write operations can use prepared statements with parameter binding to optimize database performance. The transaction system implements isolation level management ensuring consistency guarantees. Write operations can include retry logic for handling transient database failures. The database interaction layer implements connection pooling with health monitoring and automatic recovery.

In step 810, the method can include processing acknowledgments using a multi-phase protocol. The acknowledgment system maintains state enabling exactly-once processing guarantees. Processing can include verification of database commits ensuring durability guarantees. The implementation supports batch acknowledgments to optimize network utilization. Acknowledgment tracking can include timeout management to trigger reprocessing when necessary.

In step 812, the method can include determining if any events failed. The detection system can include pattern recognition to identify systematic failures. Error classification enables appropriate handling strategies for different failure types. The implementation maintains failure history enabling trend analysis. The system can handle different types of failures with specialized strategies, including immediate retry for transient failures and validation workflows for data-related failures.

In step 814, the method can include processing a retry queue. The retry processing includes backoff calculation considering various factors such as previous attempts, system load, and event priority. The retry queue management can include memory management to prevent queue growth under sustained failures. The system maintains metrics about retry patterns and can implement expiration policies to prevent indefinite retry attempts.

Throughout execution, the method can maintain comprehensive monitoring of processing aspects. Metric collection includes timing measurements enabling performance analysis. The monitoring system can implement automatic aggregation of operational metrics. The implementation includes error recovery mechanisms maintaining system consistency through state verification and handling of various failure scenarios.

The method can implement various performance optimizations including memory pool management, efficient data structure selection, and batch optimization. The system maintains audit trails of event processing history, enabling operational analysis while ensuring reliable event processing and consistent data handling.

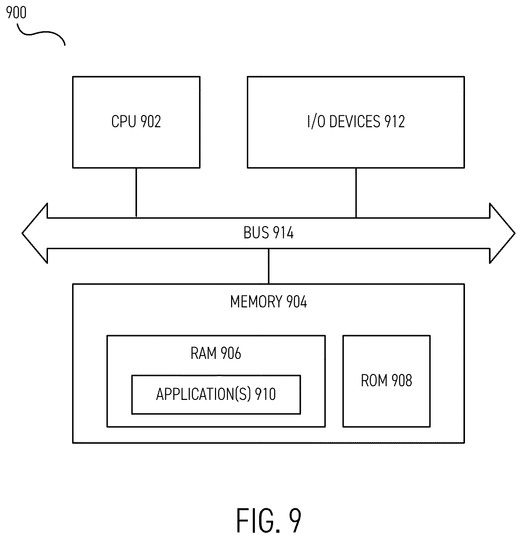

FIG. 9 is a block diagram illustrating a computing device.

As illustrated, the device 900 includes a processor or central processing unit (CPU) such as CPU 902 in communication with a memory 904 via a bus 914. The device also includes one or more input/output (I/O) or peripheral devices 912. Examples of peripheral devices include, but are not limited to, network interfaces, audio interfaces, display devices, keypads, mice, keyboard, touch screens, illuminators, haptic interfaces, global positioning system (GPS) receivers, cameras, or other optical, thermal, or electromagnetic sensors.

In some embodiments, the CPU 902 may comprise a general-purpose CPU. The CPU 902 may comprise a single-core or multiple-core CPU. The CPU 902 may comprise a system-on-a-chip (SoC) or a similar embedded system. In some embodiments, a graphics processing unit (GPU) may be used in place of, or in combination with, a CPU 902. Memory 904 may comprise a memory system including a dynamic random-access memory (DRAM), static random-access memory (SRAM), Flash (e.g., NAND Flash), or combinations thereof. In one embodiment, the bus 914 may comprise a Peripheral Component Interconnect Express (PCIe) bus. In some embodiments, the bus 914 may comprise multiple busses instead of a single bus.

Memory 904 illustrates an example of a non-transitory computer storage media for the storage of information such as computer-readable instructions, data structures, program modules, or other data. Memory 904 can store a basic input/output system (BIOS) in read-only memory (ROM), such as ROM 908 for controlling the low-level operation of the device. The memory can also store an operating system in random-access memory (RAM) for controlling the operation of the device.

Applications 910 may include computer-executable instructions which, when executed by the device, perform any of the methods (or portions of the methods) described previously in the description of the preceding figures. In some embodiments, the software or programs implementing the method embodiments can be read from a hard disk drive (not illustrated) and temporarily stored in RAM 906 by CPU 902. CPU 902 may then read the software or data from RAM 906, process them, and store them in RAM 906 again.

The device may optionally communicate with a base station (not shown) or directly with another computing device. One or more network interfaces in peripheral devices 912 are sometimes referred to as a transceiver, transceiving device, or network interface card (NIC).

An audio interface in peripheral devices 912 produces and receives audio signals such as the sound of a human voice. For example, an audio interface may be coupled to a speaker and microphone (not shown) to enable telecommunication with others or generate an audio acknowledgment for some action. Displays in peripheral devices 912 may comprise liquid crystal display (LCD), gas plasma, light-emitting diode (LED), or any other type of display device used with a computing device. A display may also include a touch-sensitive screen arranged to receive input from an object such as a stylus or a digit from a human hand.

A keypad in peripheral devices 912 may comprise any input device arranged to receive input from a user. An illuminator in peripheral devices 912 may provide a status indication or provide light. The device can also comprise an input/output interface in peripheral devices 912 for communication with external devices, using communication technologies, such as USB, infrared, Bluetooth^{®}, or the like. A haptic interface in peripheral devices 912 provides tactile feedback to a user of the client device.

A GPS receiver in peripheral devices 912 can determine the physical coordinates of the device on the surface of the Earth, which typically outputs a location as latitude and longitude values. A GPS receiver can also employ other geo-positioning mechanisms, including, but not limited to, triangulation, assisted GPS (AGPS), E-OTD, CI, SAI, ETA, BSS, or the like, to further determine the physical location of the device on the surface of the Earth. In one embodiment, however, the device may communicate through other components, providing other information that may be employed to determine the physical location of the device, including, for example, a media access control (MAC) address, Internet Protocol (IP) address, or the like.

The device may include more or fewer components than those shown in FIG. 9, depending on the deployment or usage of the device. For example, a server computing device, such as a rack-mounted server, may not include audio interfaces, displays, keypads, illuminators, haptic interfaces, Global Positioning System (GPS) receivers, or cameras/sensors. Some devices may include additional components not shown, such as graphics processing unit (GPU) devices, cryptographic co-processors, artificial intelligence (AI) accelerators, or other peripheral devices.

The subject matter disclosed above may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The preceding detailed description is, therefore, not intended to be taken in a limiting sense.

Throughout the specification and claims, terms may have nuanced meanings suggested or implied in context beyond an explicitly stated meaning. Likewise, the phrase "in an embodiment" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and," "or," or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure is described with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general-purpose computer to alter its function as detailed herein, a special purpose computer, application-specific integrated circuit (ASIC), or other programmable data processing apparatus, such that the instructions, which execute via the processor of the computer or other programmable data processing apparatus, implement the functions/acts specified in the block diagrams or operational block or blocks. In some alternate implementations, the functions or acts noted in the blocks can occur out of the order noted in the operational illustrations. For example, two blocks shown in succession can in fact be executed substantially concurrently or the blocks can sometimes be executed in the reverse order, depending upon the functionality or acts involved.

## Claims

1. A method comprising:
receiving activity events through a distributed event queue, wherein the activity events measure user interactions with a software application;
executing distributed queries to collect configuration metrics about data model structures of components of the software application;
processing the activity events and configuration metrics in parallel using multiple processing nodes to generate processed events;
storing the processed events with associated timestamps; and
correlating the processed events to identify a change in data model structures that affects performance of the software application.

2. The method of claim 1, wherein processing the activity events comprises:
adding the activity events to a consumer group for distributed processing;
batching the activity events until reaching a batch size; and
writing each batch to a time series database as an atomic transaction.

3. The method of claim 1 or 2, wherein executing distributed queries to collect configuration metrics comprises:
retrieving a list of data sources;
filtering the list of data sources based on feature flags;
distributing the list of data sources across the multiple processing nodes; and
executing configuration queries in parallel across the multiple processing nodes.

4. The method of any one of the preceding claims, further comprising:
determining an aggregation period for the processed events;
calculating statistics for the aggregation period; and
storing the statistics in a time series database.

5. The method of any one of the preceding claims, wherein processing the activity events and configuration metrics in parallel using multiple processing nodes comprises:
executing multiple tasks concurrently within each processing node using a thread pool;
processing activity events and configuration metrics through separate handling paths; and
coordinating batch operations for the processed events and metrics before storage.

6. The method of any one of the preceding claims, further comprising:
detecting failed event processing operations;
adding failed events to a retry queue; and
processing the retry queue using an exponential backoff strategy.

7. The method of any one of the preceding claims, wherein correlating the processed events comprises:
identifying changes in configuration during a time period;
analyzing performance metrics before and after the changes in configuration;
and
generating impact scores based on the performance metrics.

8. A computer program that, when executed by one or more processors, causes the one or more processors to carry out the method of any one of claims 1 to 7.

9. A computer readable medium storing the computer program of claim 8.

10. A device comprising one or more processors arranged to carry out the method of any one of claims 1 to 7.
